# EUROPÄISCHE PATENTSCHRIFT

(11) **EP 1 382 439 B1**
(45) Veröffentlichungstag und Bekanntmachung des Hinweises auf die Patenterteilung: **14.10.2009**
(21) Anmeldenummer: 03013611.3
(22) Anmeldetag: 16.06.2003
(51) Int. Cl.: B32B 3/30, B60R 13/08

(54) **Mehrschichtplatte zur Verringerung der Schallabstrahlung**
Multilayer panel for reduction of sound emissions
Panneau stratifié pour réduire le rayonnement acoustique

(30) Priorität: 15.07.2002 DE 10231791
(43) Veröffentlichungstag der Anmeldung: 21.01.2004
(73) Patentinhaber: Airbus Deutschland GmbH, 21129 Hamburg (DE)
(72) Erfinder: Boock, Klaus, 23714 Timmdorf (DE)
(74) Vertreter: Hansmann, Dierk

(56) Entgegenhaltungen:
- EP-A- 0 527 484
- DE-A- 10 034 990
- DE-U- 20 008 067
- GB-A- 2 204 341

## Beschreibung

Die Erfindung bezieht sich auf eine Mehrschichtplatte zur Verringerung der Schallabstrahlung gemäß dem Oberbegriff des Anspruchs 1. Sie lässt sich weitestgehend im Fahrzeugbau zur Verbesserung des akustischen Verhaltens von plattenunterteilten oder plattenausgekleideten Raumflächen einsetzen.

Es ist bekannt, dass man beispielsweise im Flugzeugbau zur Abschottung von Raumbereichen oder zur Aus- oder Verkleidung der Rumpfwand im Flugzeugkabinenbereich entsprechende Mehrschichtplatten verwendet. Diese Mehrschichtplatten weisen einen Kern (eine Kernschicht) auf, der (die) mit Schäumen oder Waben oder ausgeschäumten Waben realisiert ist, auf welchem Deckschichten aus hochzugfestem Material befestigt sind. Diese Art Plattenaufbau besitzt ein schlechtes [für das Flug(begleit)personal und den Flugpassagier nicht befriedigendes] akustisches Verhalten, das sich mit einem niedrigen Schalldämmmaß und einem hohen Schallabstrahlgrad bei Körperschallanregung umschreiben lässt. Auf den Fahrzeugbau allgemein übertragen wird die Abstellung von ähnlich gelagerte Problemfällen zur Verbesserung der Raumakustik eines (auf dem Land oder auf dem Wasser sich fortbewegenden) Fahrzeuges ebenfalls bedeutsam sein.

Außerdem ist aus der DE 41 26 781 A1 eine Mehrschichtplatte, die als Flächenbauelement bezeichnet wird, bekannt. Der Aufbau dieses Flächenbauelements umfasst eine Kernschicht und zwei äußere Schichten (Deckschichten), die auf der Grund- und Deckfläche der Kernschicht befestigt sind. Aus den Figuren 3 bis 5 dieser Druckschrift mit den entsprechenden Bilderläuterungen wird man entnehmen, dass der Kemschicht mehrere Schlitze eingearbeitet sind, die zueinander parallel verlaufen. Diese Schlitze mit einer definierten Breite, die voneinander einen gleichbleibenden Abstand aufweisen, durchqueren die Kernschicht zu einem wesentlichen Teil ihrer Dicke, wobei eine Schlitz-Tiefe, die 85 % bis 95 % der Kernschicht-Dicke betragen soll, angegeben wird.

Ein ähnlicher Aufbau wird durch die DE 100 34 990 A1 vorgeschlagen. Hier wird eine Mehrschichtplatte vorgestellt, deren Schichtenaufbau sich aus einer Kernschicht und wenigstens zwei Deckschichten zusammensetzt. Auf der Grundfläche der Kernschicht ist eine untere Deckschicht und auf der Deckfläche der Kernschicht ist eine obere Deckschicht befestigt. In die Kernschicht sind mehrere Schlitze eingearbeitet sind, die nach einer festgelegten Schlitzarchitektur verlaufend über die Grund- oder Deckfläche der Kernschicht verteilt angeordnet sind. Diese Schlitze sind parallel verlaufend angeordnet und lotrecht zur Grund- oder Deckfläche der Kernschicht eingelassen. Es wird eine Schlitzarchitektur vorgeschlagen, nach der zunächst diese Schlitze der Kernschicht in horizontaler Richtung eingelassen sind. Zusätzlich berücksichtigt die Schlitzarchitektur auch parallel verlaufende Schlitze, die in vertikaler Richtung der Kernschicht eingelassen werden können, wodurch eine Kreuzung dieser Schlitze erreicht wird. Es wird vorgeschlagen, dass die Schlitze nicht gänzlich über die volle Tiefe der Kernschicht ausgenommen sind. Hinsichtlich des Abstandes der parallel angeordneten Schlitze kann man aus der Fig. 1 der Druckschrift einen voneinander abweichenden Schlitzabstand erkennen, der in der Schlitzrichtung voneinander abweicht.

Beide Lösungen besitzen den Nachteil, dass es - wegen der gradlinigen Schlitzung der Kemschicht - in Schlitzrichtung leicht zu einem Bruch der Deckschicht kommen wird. Die Deckschicht wird im Biegefall auf der gestauchten Seite in den Schlitz einbrechen. Dieser Umstand ist der Fachwelt unter der Bezeichnung: "Grabenbruch" bekannt, den es
- neben einer unerwünschten leichten Verformbarkeit der Mehrschichtplatte (des Leichtbau-Flächenelementes) und
- einer Einflussnahme auf das akustische Verhalten der Mehrschichtplatte durch Verringerung von deren Schallabstrahlung
zu vermeiden gilt.

Gebrauchsmuster DE20008067U lehrt ein flächiges Verbundbauteil, bestehend aus einem flächigen Blechträgerteil und einem damit verbundenem, flächigen Auskleidungsteil aus Fasermaterial zur Aussteifung und/oder Wärmedämmung des Blechträgerteils, wobei das Verbundbauteil winklig angeordnete, sich jedoch nicht kreuzende, kurvenförmige Schlitze als Zugspannungs-Ausgleichsschlitze aufweisen kann.

Ferner ist aus der DE 195 27 081 C1 eine weitere Mehrschichtplatte, die als Flächenelement bezeichnet wird, bekannt. Der Aufbau dieses Flächenelements umfasst ebenfalls eine Kernschicht und zwei Deckschichten, die auf der Grund- und Deckfläche befestigt sind. Ebenso findet man die parallelen Schlitze wieder, die in die Kernschicht und nunmehr auch in einer der beiden Deckschichten senkrecht zur Oberfläche angeordnet sind, um eine Flexibilität in Biegerichtung zu erhalten. Es wird auch vorgeschlagen, zwei Flächenelemente, die jeweils den vorbeschriebenen Aufbau besitzen, körperlich durch Zusammenfügung zu vereinen. Damit wird bezweckt, dass eine gegenläufige Biegsamkeit des aus zwei Flächenelementen bestehenden Elementekörpers umgesetzt wird. Auch hinsichtlich dieser Lösung treten bei der Betrachtung von nur einem einzelnen Flächenelement gewisse Zweifel auf, ob sich - wegen der gradlinigen Schlitzung der Kernschicht - in Schlitzrichtung ein Grabenbruch der beanspruchten Deckschicht verhindern lässt. Sicherlich wird eine gegenläufige Biegsamkeit des aus zwei Flächenelementen integrierten Elementekörpers erreicht werden, die aber im Biegefall des auf Biegung beanspruchten Flächenelementes ein Einbrechen der Deckschicht auf der gestauchten Seite in den Schlitz nicht ausschließt. Nun mag es auch sein, dass etwaige Anregungen zur Schlitzgestaltung (Schlitzabstand, -tiefe, -breite) vermittelt werden, jedoch die dort vorgeschlagene Realisierung einer Schlitzbreite von (nebeneinander in vertikaler Richtung und parallelverlaufend in horizontaler Richtung angeordneten) Schlitzen eines Leichtbau-Flächenelementes (mit vorgegebener Wanddicke), die fast die halbe Breite der zwischen den verbleibenden Stege des Flächenelementes besitzen soll(te), zielt allein auf die Erzeugung einer Flexibilität (einer optimalen Biegsamkeit zur geschlitzten Stelle gerichtet) in einer vorgegebenen Biegerichtung des Flächenelementes ab.

Eine variable (angepasste) Wahl hinsichtlich der Schlitzgestaltung, die in einer direkten Beziehung mit einer nicht zu überschreitenden kritischen Gesamtbiegesteifigkeit des Schichtenaufbaus respektive in Korrelation der Kernschubsteife steht, welche auch in Korrelation mit gewünschten akustischen Verbesserungen einer einzelnen Mehrschichtplatte betrachtet wird, steht nach der DE 195 27 081 C1 außerhalb der Betrachtungen.

Ein Fachmann, der das akustische Verhalten der bekannten Mehrschichtplatten beeinflussen möchte und gleichfalls die leichte Verformbarkeit einer Mehrschichtplatte, die eine geschlitzte Kemschicht aufweist, anstrebt sowie im Biegefall dieser Mehrschichtplatte die Verhinderung eines Grabenbruches der beanspruchten Deckschicht erreichen möchte, wird sich an dieser Druckschrift - wie auch an den weiteren vorgenannten Druckschriften (ausgenommen die DE 100 34 990 A1) - wohl kaum orientieren, zumal der vorgestellten Lösung eine gänzlich andere Problemstellung zugrunde liegt. Hinsichtlich der Gestaltung der Schlitztiefe und des Schlitzabstandes schweigt sich die DE 195 27 081 C1 gänzlich aus. Außerdem verwenden die vorgenannten Druckschriften auch keinen Gedanken darauf, der etwaige verändernde Maßnahmen umfasst, um Lösungen von bekannten Mehrschichtplatten zu verbessem. Um einerseits mit einer ausgewogenen Schlitzung der Kernschicht von Mehrschichtplatten deren akustisches Verhalten durch Verringerung von deren Schallabstrahlung zu verbessern und gleichfalls eine leichte Verformbarkeit der verwendeten Mehrschichtplatte zu gewähren, mit der ein Grabenbruch der Deckschicht der Mehrschichtplatte in Schlitzrichtung verhindert wird, bleibt bei diesem Kenntnisstand demnach zu schlussfolgern, dass es weiterer keativer Überlegungen bedarf, um zu einer derartigen gewünschten Mehrschichtplatte zu gelangen.

Demzufolge liegt der Erfindung die Aufgabe zugrunde, eine Mehrschichtplatte derart auszubilden, dass mit ihr eine leichte Verformbarkeit der verwendeten Mehrschichtplatte, deren akustisches Verhalten durch Verringerung von deren Schallabstrahlung mit einer ausgewogenen Schlitzung der Kernschicht maßgeblich beeinflusst wird, umgesetzt wird, mit der ein Grabenbruch der Deckschichten der Mehrschichtplatte in Schlitzrichtung verhindert wird.

Diese Aufgabe wird durch die im Anspruch 1 angegebenen Maßnahmen gelöst. In den weiteren , Unteransprüchen sind zweckmäßige Weiterbildungen und Ausgestaltungen dieser Maßnahmen angegeben.

Die Erfindung ist in einem Ausführungsbeispiel anhand der beigefügten Zeichnungen beschrieben.
Es zeigen
- Fig. 1: den Aufbau einer Mehrschichtplatte mit einer gradlinigen und parallelverlaufenden Schlitzung von deren Kemschicht;
- Fig. 2: die Draufsicht auf die Kemschicht nach der Fig. 1 mit Darstellung der gekreuzten Schlitzung;
- Fig. 3: den Aufbau einer Mehrschichtplatte mit einer kurvig verlaufenden und nebeneinander gelegenen Schlitzung von deren Kernschicht;
- Fig. 4: die Darstellung von einer der Kernschicht ebenflächig eingelassenen parabelförmigen Schlitzung nach der Fig. 3;
- Fig. 5: die Darstellung von einer der Kemschicht ebenflächig eingelassenen halbkreisförmigen Schlitzung nach der Fig. 3;
- Fig. 6: die Draufsicht auf die Kernschicht nach der Fig. 3 mit Darstellung der gekreuzten Schlitzung nach der Fig. 4.

Um das Verständnis für die folgenden Ausführungen zu fördern, wird zunächst allgemein auf das akustische Verhalten von Platten eingegangen. Danach ist es dem Fachmann (in Verbindung mit dem ihm geläufigen Koinzidenz-Effekt) bekannt, dass Lateralwellen auf Platten besonders gut Lärm abstrahlen, wenn sie sich mit Schall- oder Überschallgeschwindigkeit in Bezug auf das umgebende Medium ausbreiten. Da die Biegewellengeschwindigkeit einschichtiger Platten monoton mit der Frequenz zunimmt, existiert für jede Platte eine Grenzfrequenz ab der Machzahl 1 (einfache Schallgeschwindigkeit), für die Biegewellen erreicht wird. In einem je nach Plattenmaterial kleineren oder größeren Bereich um diese Frequenz herum kommt der Koinzidenz-Effekt zum Tragen und verringert das Luftschalldämmmaß gegenüber dem Massegesetz, ebenso strahlt in diesem Bereich diese Platte besonders effektiv Körperschall ab. Falls einschichtige Platten eine gewisse Steifigkeit aufweisen sollen, wird man kaum den Wirkungen nach dem Koinzidenz-Effekt entgehen.

Demgegenüber wird der Fachmann bei Mehrschichtplatten eine andere Situation beobachten. Ihm ist demnach auch das Wissen um den prinzipiellen Verlauf der Lateralwellen von Mehrschichtplatten über der Frequenz bekannt. Danach wird man im niederen Frequenzbereich das Auftreten von Lateralbiegewellen beobachten, deren Geschwindigkeit von der Gesamtbiegesteifigkeit der Mehrschichtplatte bestimmt wird. Mit steigender Frequenz beginnt die Biegewelle langsam in eine Lateralschubwelle überzugehen, deren Ausbreitungsgeschwindigkeit unabhängig von der Frequenz proportional zur Wurzel des Kernschubmoduls wächst. Bei noch höheren Frequenzen geht dann die Lateralschubwelle in eine Lateralbiegewelle über, deren Ausbreitungsgeschwindigkeit von der Biegesteifigkeit der Deckschichten der Mehrschichtplatte bestimmt wird. Sofern die Möglichkeit bestehen würde, in dieser Situation den Schubmodul des (der) Kerns(chicht) in geeigneter Weise auswählen zu können, dann kann man möglicherweise erreichen, dass die Lateralwellen im gesamten Frequenzbereich unterhalb der Schallgeschwindigkeit der Luft bleiben. Durch entsprechende Manipulation der übrigen Parameter: "Deckschichtendicke, Kem(schichten)dicke, Deckschichten-E-Modul, Dichte von Deckschichten und Kern(schicht)" lässt sich stets erreichen, dass die Biegesteifigkeit der betrachteten Mehrschichtplatte ausreichend hoch gehalten werden kann.

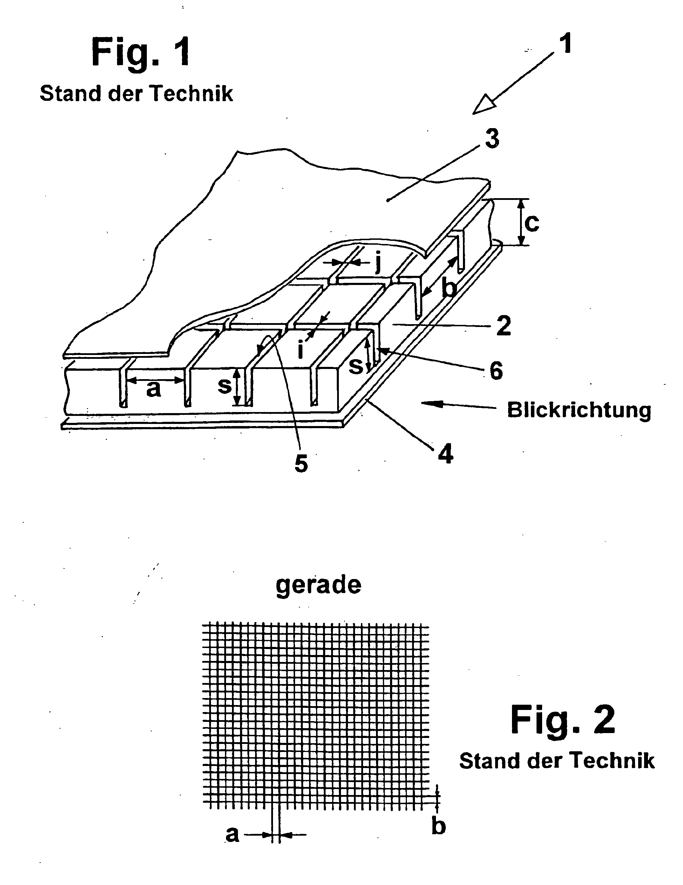

Um also eine akustisch verbesserte Mehrschichtplatte zu erhalten, sind entsprechende Maßnahmen vorzusehen, die (mit Rückbetrachtung auf das vorerwähnte Verhalten der Mehrschichtplatten) auf ein Herabsetzen von deren Kernschubsteife, die (physikalisch betrachtet) dem Kernschubmodul direkt proportional ist, abzielen. Die Umsetzung der Herabsetzung dieser Kernschubsteife wird man auch durch eine Schlitzung der Kernschicht 2 (des Kerns) einer Mehrschichtplatte 13, wie sie im Endstadium in der Fig. 1 dargestellt ist, erreichen.

Diese bekannte Mehrschichtplatte 13 nach der Fig. 1 setzt sich aus einer Kernschicht 2 und zwei Deckschichten 3, 4 zusammen. Auf dieser Kernschicht 2 ist auf der Grundfläche eine untere Deckschicht 4 und auf der Deckfläche eine obere Deckschicht 3 befestigt. Die Kernschicht 2, die eine bestimmte Kemschichtdicke c aufweist, ist mit mehreren Schlitzen 5, 6 versehen, die (durch Anwendung eines dafür geeigneten Bearbeitungsverfahrens, bspw. durch Fräsen,) der Kernschichtdicke c ausgenommen sind. Diese Schlitze 5, 6 sind nach einer festgelegten Schlitzarchitektur (verlaufend) über die Grund- oder Deckfläche der Kernschicht 2 verteilt angeordnet. Sie sind lotrecht zur Grund- oder Deckfläche der Kernschicht 2 [je nach der Blickrichtung des Beobachters der (im installierten Zustand positionierten) Mehrschichtplatte 13] eingelassen. Nach dem Vorbild der Fig. 1 besitzen die Schlitze 5, 6 eine lotrecht zur Grundfläche der Kernschicht 2 angeordnete Lage, welche sich nicht gänzlich über die volle Tiefe der Kernschicht 2 (soll heißen: nicht die gesamte Kernschichtdicke c durchspanend) erstreckt. Dabei wird eine Schlitztiefe s berücksichtigt, die kleiner der Kernschichtdicke c ist. Die in der Fig. 1 angedeutete Schlitzarchitektur der Kernschicht 2 ist dermaßen konzipiert, wonach der gesamte Deckflächenbereich der Kernschicht 2 mit sich kreuzenden Schlitzen 5, 6 versehen ist. Dabei werden die in horizontaler Richtung verlaufenden Schlitze 5, die im Schlitzabstand a parallel verlaufend angeordnet (eingearbeitet) sind und eine Schlitztiefe s sowie eine Schlitzbreite j aufweisen, zusätzlich von in vertikaler Richtung verlaufenden Schlitzen 6 gekreuzt, die im Schlitzabstand b parallel verlaufend angeordnet (eingearbeitet) sind und eine Schlitztiefe s sowie eine Schlitzbreite i aufweisen.
Diese Schlitze 5, 6 werden über den (überwiegenden) Flächenbereich der Grund- oder Deckfläche der Kernschicht 2 verteilt angeordnet oder bedecken nur einen ausgewählten Teilbereich der Grundoder Deckfläche der Kernschicht 2. Dabei sind die Schlitzabstände a, b und die Schlitztiefe s sowie die Schlitzbreite i, j der betreffenden Schlitze 5, 6, deren Wahl in direkter Beziehung mit einer nicht zu überschreitenden kritischen Gesamtbiegesteifigkeit des Schichtenaufbaus respektive in Korrelation der Kernschubsteife der Kernschicht steht, (aus den vorher erwähnten Gründen) variabel gestaltet. Nach dieser vorgestellten Lösung lassen sich Mehrschichtplatten 13, deren Gewicht und Steifigkeit unverändert bleibt, gegenüber herkömmlichen (bspw. im Flugzeugbau verwendeten) Mehrschichtplatten akustisch so weit verbessern, dass eine erheblich höhere Schalldämmung erreicht wird. Der interessierte Fachmann wird entsprechende Platten, die entweder ungeschlitzt, kreuzgeschlitzt oder geschlitzt ausgeführt sind, unter simulierten Praxisbedingungen miteinander vergleichen und eine kräftige Reduzierung der Schallabstrahlung bei Körperschallanregung dieser Platten feststellen.

Hinsichtlich der Verformbarkeit dieser Mehrschichtplatten 1, die eine gradlinig geschlitzte Kernschicht 2 aufweisen, wird er, eine entsprechende Flächenbelastung der Platten vorausgesetzt, in Schlitzrichtung der einzelnen Platte (nach dem Vorbild der Fig. 1) mit der Schlitzarchitektur (nach dem Vorbild der Fig. 2) einen Bruch der Deckschicht 2 beobachten, wobei die Kernschicht 2 im Biegefall auf der gestauchten Seite in den Schlitz 5, 6 einbrechen wird. Eine leichte Verformbarkeit der verwendeten Mehrschichtplatte 1, deren akustisches Verhalten durch Verringerung von deren Schallabstrahlung mit einer ausgewogenen Schlitzung der Kemschicht 2 maßgeblich beeinflusst wird, mit der ein Grabenbruch der Deckschichten 3, 4 der Mehrschichtplatte 1 in Schlitzrichtung verhindert wird, bleibt verborgen.

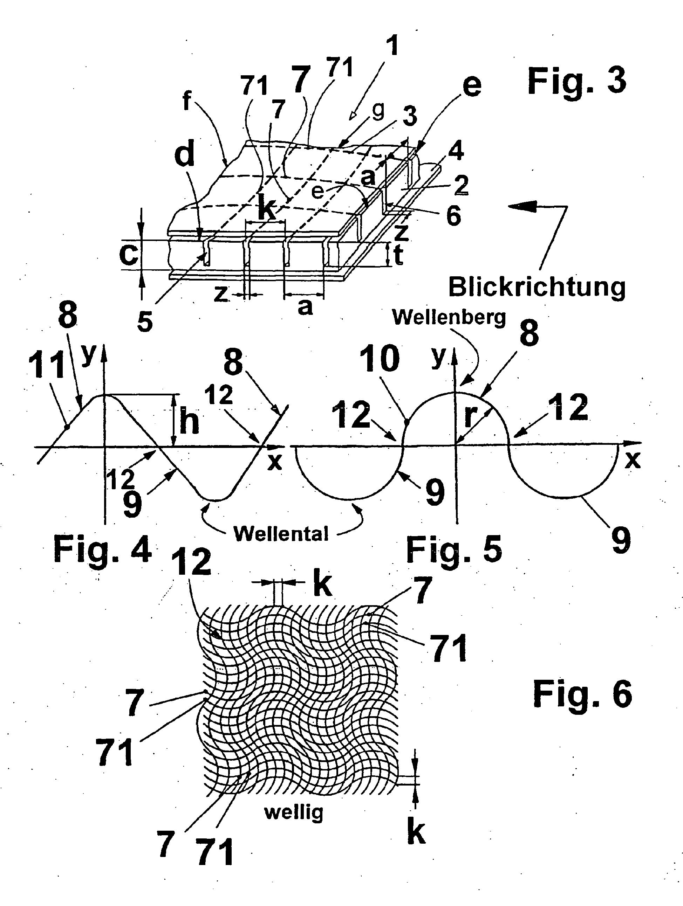

Um diese geschilderten Nachteile, die der vorgenannten Mehrschichtplatte 1 anhaften, abzustellen wird die Aufmerksamkeit auf eine verbesserte Mehrschichtplatte 1 nach der Fig. 3 gelenkt, aus deren Kernschicht 2 mehrere Schlitze 5, 6 ausgenommen sind, deren Verlauf aus der Schlitzarchitektur nach der Fig. 6 deutlich wird.

Auch diese Mehrschichtplatte 1 besitzt einen Schichtenaufbau, der sich aus der erwähnten Kernschicht 2 und wenigstens zwei Deckschichten 3, 4 zusammensetzt. Dieser Kernschicht 2 ist auf, der Grundfläche eine untere Deckschicht 4 und auf der Deckfläche eine obere Deckschicht 3 befestigt, wobei in die Kernschicht 2 ebenfalls mehrere Schlitze 5, 6 eingearbeitet sind, die in horizontaler und vertikaler Richtung verlaufend über die Grund- oder Deckfläche der Kernschicht 2 verteilt mit einer festgelegten Schlitzarchitektur angeordnet sind. Die Schlitze 5, 6 sind lotrecht zur Grund- oder Deckfläche der Kernschicht 2 eingelassen, wobei die in horizontaler Richtung verlaufenden Schlitze 5 zusätzlich von den in vertikaler Richtung verlaufenden Schlitzen 6 gekreuzt sind. Soweit werden keine Abweichungen hinsichtlich der Anordnung nach den Figuren 1 und 2 festgestellt werden. Um dem befürchteten Grabenbruch, der im Biegefall auf der gestauchten Seite in den gradlinig ausgeführten Schlitz 5, 6 (nach der Anordnung gemäß den Figuren 1 und 2) einbrechen wird, zu entgehen, sind (nach der Anordnung gemäß der Fig. 3) die [der Grund- oder Deckfläche der Kernschicht 2 eingelassenen] Schlitze 5, 6 kurvig (also: in der Art einer Kurve) verlaufend und im Kurvenabstand, k nebeneinander gelegen angeordnet, die der Dicke c der Kernschicht 2 mit einer variablen Kurventiefe t ausgespart sind.

Der Kurvenabstand k ist durch den Abstand zweier nebeneinander gelegener Schlitzlinien 7, 71, die nach der Fig. 3 mit der Darstellung eines Abschnittes der Mehrschichtplatte 1 (nur) leicht gekrümmt dargestellt sind, bestimmt. Diese Schlitzlinien 7, 71 verlaufen mittig einer Kurvenbreite z der Schlitze 5, 6, wobei die Kurvenbreite z dieser Schlitze 5, 6 mit dem Wachstum der Kurventiefe t konstant bleibend ausgeführt wird. Beispielsweise wird vorgesehen, dass die Schlitze 5, 6 mit einer konstant bleibenden Kurvenbreite z, die zwischen 40 mm und 60 mm festgelegt ist, ausgenommen werden. Auch ist dier Kurvenabstand k zwischen zwei horizontal oder vertikal verlaufenden Schlitzen 5, 6 gleichbleibend konstant ausgeführt.

Die Schlitzlinien 7, 71, die eine wellige Form besitzen, bestimmen maßgeblich den mit ihnen übereinstimmenden Verlauf der Schlitze 5, 6. Die Draufsicht nach der Fig. 6, aus der man (vorgreifend) die Schlizarchitektur der mit Wellenform geschlitzten oberen oder unteren Deckschicht 3, 4 der Kemschicht 2 erkennt, vermittelt einen entsprechenden Eindruck.

Auch wird, wie in der Fig. 3 angedeutet, beispielweise vorgesehen, dass die einzelne Schlitzlinie 7, 71 zwischen zwei parallelen Seitenrändern d, e, f, g der Kernschicht 2, die sich gegenüber liegen, nicht unterbrochen (also durchgehend) ausgeführt wird. Dabei wird man (situationsbedingt) wahlweise einen Teilbereich oder den überwiegenden oder den vollständigen Flächenbereich der Grund- oder Deckfläche der Kernschicht 2, der durch genannte Seitenränder d, e, f, g eingegrenzt ist, mit einer Kurvenschar von wellig verlaufenden Schlitzen 5, 6 versehen, die nicht gänzlich über die volle Kurventiefe t der Kernschicht 2 ausgenommen sind.

Demnach werden diese Schlitzlinien 7, 71, die grund- oder deckflächig über die Kernschicht 2 verteilt angeordnet sind, eine Wellenform aufweisen, die - mit einem Blick auf die Figuren 4 und 5 - eine flachkurvige Berg- und Talform beschreiben. .

Die Kurvenform der Schlitze 5, 6 ist mit aneinander gereihten Schlitzgebilden 8, 9 realisiert ist, wobei letztere mit - nach der Fig. 4 - geschlitzten Halbkreisen 10 oder mit - nach der Fig. 5 - Parabeln 11 realisiert werden. Durch die halbkreis- oder parabelförmige Schlitzung ist ein (durch die Halbkreisoder die Parabelöffnung) ungeschlitzter Flächenbereich der Kernschicht 2 eingeschlossen, der durch eine Ordinate (x) oder eine Abszisse (y), die einem fiktiv abgelegten Koordinatensystems begrenzt ist, das grund- oder deckflächenparallel fiktiv auf der Kernschicht (2) abgelegt wird. Außerdem sind die Schlitzenden von zwei aneinander gereihten (halbkreis- oder parabelförmigen) Schlitzgebilden 8, 9, die sich in Ordinaten - oder Abszissen-Richtung erstrecken, einem auf der Ordinate x oder der Abzisse y gelegenen punktuellen Schlitzbereich 12, den man als Übergangsbereich der Schlitzenden ansehen kann, einmündend angeordnet. Dabei sollte man (hinsichtlich der Figuren 4 und 5) von folgender Betrachtungsweise ausgehen, nach der ein erstes Schlitzgebilde 8 oberhalb und ein zweites Schlitzgebilde 9 unterhalb der Ordinate x und / oder der Abszisse y gelegen ist, wobei deren Wellenberg und Wellental lotrecht beabstandet der betreffenden Achse gelegen ist, deren ordinatenoder abszissenentfernter Achsenabstand durch die Parabelhöhe h der Parabel 11 oder durch den Radius r des Halbkreises 19 festgelegt ist. Der Kurvenradius r der Halbkreise 10 und die Parabelhöhe h der Parabel sollte konstant bleiben.

Zurückkommend auf die Fig. 6 wird in dieser Draufsicht ein Kurvenmuster dargestellt, dass mit Schlitzen 5, 6, die kreuz und querflächig über die Grund- oder Deckfläche der Kernschicht 2 ausgenommenes sind, realisiert ist. Dieses ebenflächig aufgespannte Kurvenmuster wird mit einer Kurvenschar an Schlitzen 5, 6, die auf der Grund- oder Deckfläche ausgenommenen sind, gebildet.

Zusammenfassend wird nach dem Vorbild der Fig. 3 eine Mehrschichtplatte 1 vorgestellt, deren Schichtenaufbau sich aus einer Kernschicht 2 und zwei Deckschichten 3, 4 zusammensetzt. Der Kernschicht 2 sind mehrere wellenartig verlaufende Schlitze 5, 6 eingearbeitet, die mit einer nach der Fig. 6 festgelegten Schlitzarchitektur der Grund- oder Deckfläche der Kemschicht 2 ausgenommen sind. Durch die kurvige Anordnung der Schlitze 5, 6, deren Kurvenform sich beispielsweise mit parabel- oder halbkreisförmig geformten Schlitzen 5, 6 nach dem Vorbild der Figuren 4 und 5 umsetzen lässt, wird ein in Schlitzrichtung leicht auftretender Bruch (Grabenbruch) der beanspruchten Deckschicht 3, 4 verhindert, der im Biegefall einer nach der Fig. 1 gradlinig geschlitzten Mehrschichtplatte 1 auf der gestauchten Seite in den Schlitz 5, 6 sich unvermeidbar einstellen wird. Dieses Bruchverhalten wird einerseits durch die wellige Anordnung der Schlitze 5, 6 (nach den Figuren 3 bis 6) verbessert, andererseits durch die Ausbildung einer oder beider Deckschichten 3, 4 als dünne biegesteifere Wabenplatte, die nicht so leicht ausknicken, nochmals verbessert. Dabei werden Wabenplatten angeordnet, die 4- oder 6-eckig ausgebildet sind, oder es wird (allg.) eine Mehrschichtplatte vorgeschlagen, die laminiert oder geschäumt ist.

Die wellige Anordnung kann mit Kurven - also beispielsweise mit aneinander gereihten Halbkreisen - (vgl. beigegebene Fig. 5 in Korrelation der Fig. 6) realisiert werden, die einen gewissen definierten Radius r (des Halbkreises 10), bspw. etwa 50 mm, aufweisen, wobei die ausgenommene Kurvenbreite z möglichst klein und die ausgesparte Kurvetiefe t variabel gestaltet sein soll. So werden beispielsweise lotrecht der oberen Deckschicht 3 der Kemschicht 2 ausgenommene Schlitz-Kurven realisiert, wodurch man den erwähnten Grabenbruch verhindern wird.

Auch wird erwähnt, dass durch die kurvenartige (wellenartige) Schlitzung die "Schubsteife der Kernschicht 2" definiert manipuliert beeinflusst wird. Die Schubsteife bestimmt in weiten Frequenzbereichen das Schallstrahlverhalten der Gesamtplatte für die Ausbildung (genauer: die Geschwindigkeit) der Biegewellen. Die Biegewellen müssen innerhalb einem bestimmten Frequenzbereich langsamer sein als die Schallgeschwindigkeit der Luft. In dieser Situation strahlt dann die Platte ineffektiv ab.

Außerdem ist die Dicke c der Kernschicht 2 ein wichtiger Parameter für die Tragfähigkeit der Mehrschichtwabenplatte 1, was man trotz der angestrebten Verringerung der Schallstrahlung (statisch betrachtet) nicht vergessen sollte. Wird die Dicke c der Kernschicht 2 gesteigert, dann kann die Dicke der oberen und / oder unteren Deckschicht 3, 4, die der Grund- und der Deckfläche der Kernschicht 2 aufliegen, entsprechend gering(er) bemessen werden. Anderenfalls kann die Dicke c der Kernschicht 2 gemindert werden, wenn die Dicke der unteren und / oder oberen Deckschicht 3, 4 entsprechend angehoben wird. Damit wird die Tragfähigkeit, nicht das Schallstrahlverhalten der Gesamtplatte beeinflusst.

## Patentansprüche

1. **Mehrschichtplatte zur Verringerung der Schallabstrahlung**, deren Schichtenaufbau sich aus einer Kemschicht (2) und wenigstens zwei Deckschichten (3, 4) zusammensetzt, wobei an der Kemschicht (2) auf der Grundfläche eine untere Deckschicht (4) und auf der Deckfläche eine obere Deckschicht (3) befestigt ist, und in die Kemschicht (2) mehrere Schlitze (5, 6) eingearbeitet sind, die in horizontaler und vertikaler Richtung verlaufend über die Grund- oder Deckfläche der Kemschicht (2) verteilt mit einer festgelegten Schlitzarchitektur angeordnet sind, die lotrecht zur Grund- oder Deckfläche der Kernschicht (2) eingelassen sind, wobei die in horizontaler Richtung verlaufenden Schlitze (5) zusätzlich von den in vertikaler Richtung verlaufenden Schlitzen (6) gekreuzt sind, **dadurch gekennzeichnet, dass** die Schlitze (5, 6) kurvig verlaufend und im Kurvenabstand (k) nebeneinander gelegen angeordnet sind, die in der Dicke (c) der Kemschicht (2) mit einer variablen Kurventiefe (t) ausgespart sind.

2. **Mehrschichtplatte** nach Anspruch 1, **dadurch gekennzeichnet, dass** der Kurvenabstand (k) durch den Abstand zweier nebeneinander gelegener Schlitzlinien (7, 71) bestimmt ist, die mittig einer Kurvenbreite (z) der Schlitze (5, 6) verlaufend sind, wobei die Kurvenbreite (z) der Schlitze (5, 6) mit dem Wachstum der Kurventiefe (t) konstant bleibend ausgeführt ist.

3. **Mehrschichtplatte** nach Anspruch 2, **dadurch gekennzeichnet, dass** die Schlitzlinien (7, 71) wellig ausgebildet sind, mit denen der Verlauf der Schlitze (5, 6) übereinstimmend ist, wobei die Wellenform der grund- oder deckflächig über die Kemschicht (2) verteilten Schlitzlinien (7, 71) eine flachkurvige Berg- und Talform ist.

4. **Mehrschichtplatte** nach Anspruch 2, **dadurch gekennzeichnet, dass** die einzelne Schlitzlinie (7, 71) zwischen zwei parallelen Seitenrändern (d, e, f, g) der Kemschicht (2), die sich gegenüber liegen, nicht unterbrochen ist.

5. **Mehrschichtplatte** nach Anspruch 3, **dadurch gekennzeichnet, dass** die Kurvenform der Schlitze (5, 6) mit aneinander gereihten Schlitzgebilden (8, 9) realisiert ist, wobei letztere mit geschlitzten Halbkreisen (10) oder Parabeln (11) realisiert ist, und durch die halbkreis- oder parabelförmige Schlitzung ein ungeschlitzter Flächenbereich der Kemschicht (2) eingeschlossen ist, der durch eine Ordinate (x) oder eine Abszisse (y) eines fiktiven Koordinatensystems, das grund- oder deckflächenparallel fiktiv auf der Kemschicht (2) abgelegt ist, begrenzt ist, außerdem die Schlitzenden von zwei aneinander gereihten Schlitzgebilden (8, 9), die sich in Ordinaten- oder Abszissen-Richtung erstrecken, einem auf der Ordinate (x) oder der Abzisse (y) gelegenen punktuellen Schlitzbereich (12) einmündend sind.

6. **Mehrschichtplatte** nach Anspruch 5, **dadurch gekennzeichnet, dass** ein erstes Schlitzgebilde (8) oberhalb und ein zweites Schlitzgebilde (9) unterhalb der Ordinate (x) und / oder Abzisse (y) gelegen ist, wobei deren Wellenberg und Wellental lotrecht beabstandet der betreffenden Achse gelegen ist, deren ordinaten- oder abszissenentfemter Achsenabstand durch die Parabelhöhe (h) der Parabel (11) oder durch den Radius (r) des Halbkreises (19) festgelegt ist.

7. **Mehrschichtplatte** nach Anspruch 6, **dadurch gekennzeichnet, dass** der Kurvenradius (r) der Halbkreise (10) und die Parabelhöhe (h) der Parabel konstant.

8. **Mehrschichtplatte** nach Anspruch 1, **dadurch gekennzeichnet, dass** mit den Schlitzen (5, 6) ein sich über die Grund- oder Deckfläche der Kernschicht (2) ausgenommenes (aufgespanntes) Kurvenmuster ist, das in der Draufsicht auf die Grund- oder Deckfläche der Kernschicht (2) aus einer Kurvenschar an vielzählig ausgenommenen Schlitzen (5, 6) gebildet ist.

9. **Mehrschichtplatte** nach Anspruch 2, **dadurch gekennzeichnet, dass** der Kurvenabstand (k) zwischen zwei horizontal oder vertikal verlaufenden Schlitzen (5, 6) gleichbleibend konstant ist.

10. **Mehrschichtplatte** nach den Ansprüchen 4 und 9, **dadurch gekennzeichnet, dass** ein Teilbereich oder der überwiegende oder der vollständige Flächenbereich der Grund- oder Deckfläche der Kemschicht (2) mit einer Kurvenschar von kurvig verlaufenden Schlitzen (5, 6) versehen ist, die nicht gänzlich über die volle Kurventiefe (t) der Kernschicht (2) ausgenommen sind.

11. **Mehrschichtplatte** nach Anspruch 2, **dadurch gekennzeichnet, dass** die Schlitze (5, 6) mit einer konstant bleibenden Kurvenbreite (z), die zwischen 40 mm und 60 mm festgelegt ist, ausgenommen sind.

## Claims

1. A multilayer board for reducing sound radiation, whose layer structure is composed of a core layer (2) and at least two cover layers (3, 4), a lower cover layer (4) being attached to the bottom face of the core layer (2) and an upper cover layer (3) being attached to the top face of the core layer (2), and a plurality of slots (5, 6) being incorporated into the core layer (2), which slots (5, 6) are distributed, extending horizontally and vertically, with a fixed slot architecture over the bottom or top face of the core layer (2) and which are formed perpendicularly to the bottom or top face of the core layer (2), the horizontally extending slots (5) additionally being intersected by the slots (6) extending in the vertical direction, **characterised in that** the slots (5, 6) are arranged in a curved manner and next to one another with the curve spacing (k) and are recessed into the thickness (c) of the core layer (2) with a variable curve depth (t).

2. A multilayer board according to claim 1, **characterised in that** the curve spacing (k) is determined by the spacing of two slot lines (7, 71) lying next to one another, which run centrally along a curve width (z) of the slots (5, 6), the curve width (z) of the slots (5, 6) remaining constant as the curve depth (t) grows.

3. A multilayer board according to claim 2, **characterised in that** the slot lines (7, 71) are wavy and match the profile of the slots (5, 6), the wavy shape of the slot lines (7, 71) distributed over the bottom or top of the core layer (2) being a shallowly curved peak and trough shape.

4. A multilayer board according to claim 2, **characterised in that** an individual slot line (7,71) is uninterrupted between two parallel, mutually opposing side edges (d, e, f, g) of the core layer (2).

5. A multilayer board according to claim 3, **characterised in that** the curve shape of the slots (5, 6) is produced with concatenated slot configurations (8, 9), the latter being produced with slots in the form of semicircles (10) or parabolas (11) and the semicircular or parabolic slots enclosing an unslotted face area of the core layer (2), which is defined by an x-axis or a y-axis of an imaginary system of coordinates, which is laid in an imaginary fashion on the core layer (2) parallel with the bottom or top face, the slot ends of two concatenated slot configurations (8, 9), which extend in the direction of the x- or y-axis, additionally leading into a punctiform slot region (12) located on the x- or y-axis.

6. A multilayer board according to claim 5, **characterised in that** a first slot configuration (8) is positioned above and a second slot configuration (9) is positioned below the x- and/or y-axis, the wave peak and wave trough being positioned at a perpendicular distance from the relevant axis, the axial distance from the x- or y-axis being established by the parabola height (h) of the parabola (11) or by the radius (r) of the semicircle (19).

7. A multilayer board according to claim 6, **characterised in that** the curve radius (r) of the semicircles (10) and the parabola height (h) of the parabolas are constant.

8. A multilayer board according to claim 1, **characterised in that** with the slots (5, 6) a curve pattern recessed (extending) over the bottom or top face of the core layer (2) is formed, which in plan view is formed on the bottom or top face of the core layer (2) from an array of curves consisting of a multitude of recessed slots (5, 6).

9. A multilayer board according to claim 2, **characterised in that** the curve spacing (k) between two slots (5, 6) extending horizontally or vertically is constant.

10. A multilayer board according to claims 4 and 9, **characterised in that** a portion or the majority or all of the face area of the bottom or top face of the core layer (2) is provided with an array of curves consisting of curvy slots (5, 6), which are not recessed completely over the entire curve depth (t) of the core layer (2).

11. A multilayer board according to claim 2, **characterised in that** the slots (5, 6) are recessed with a constant curve width (z), which is fixed at between 40 mm and 60 mm.

## Revendications

1. Panneau stratifié pour réduire le rayonnement acoustique, dont la structure stratifiée se compose d'une couche de coeur (2) et d'au moins deux couches extérieures (3, 4), une couche extérieure inférieure (4) étant fixée à la surface de base de la couche de coeur (2) et une couche extérieure supérieure (3) étant fixée à la surface de couverture de la couche de coeur, et plusieurs rainures (5, 6) étant ménagées dans la couche de coeur (2), qui s'étendent dans les sens horizontal et vertical, sont réparties sur la surface de base ou la surface de couverture de la couche de coeur (2), présentent une architecture de rainure définie et sont réalisées perpendiculairement à la surface de base ou la surface de couverture de la couche de coeur (2), les rainures (5) orientées dans le sens horizontal étant croisées en plus par les rainures (6) s'étendant dans le sens vertical, **caractérisé par le fait que** les rainures (5, 6) s'étendent sous forme de courbes et sont disposées les unes à côté des autres avec une distance de courbe (k) et sont prévues avec une profondeur de courbe (t) variable dans l'épaisseur (c) de la couche de coeur (2).

2. Panneau stratifié selon la revendication 1, **caractérisé par le fait que** la distance de courbe (k) est déterminée par la distance séparant deux lignes de rainure (7, 71) contiguës qui s'étendent au milieu d'une largeur de courbe (z) des rainures (5, 6), la largeur de courbe (z) des rainures (5, 6) étant conçue pour être constante à mesure que la profondeur de courbe (t) augmente.

3. Panneau stratifié selon la revendication 2, **caractérisé par le fait que** les lignes de rainure (7, 71) sont réalisées sous une forme ondulée avec laquelle coïncide le tracé des rainures (5, 6), la forme ondulée des lignes de rainure (7, 71), qui sont réparties sur la surface de base ou la surface de couverture de la couche de coeur (2), étant une forme à sommets et creux en courbe plate.

4. Panneau stratifié selon la revendication 2, **caractérisé par le fait que** la ligne de rainure (7, 71) individuelle n'est pas interrompue entre deux bords latéraux (d, e, f, g) parallèles de la couche de coeur (2), situés en vis-à-vis l'un de l'autre.

5. Panneau stratifié selon la revendication 3, **caractérisé par le fait que** la forme courbe des rainures (5, 6) est réalisée avec des structures de rainure (8, 9) disposées les unes à la suite des autres, lesdites structures étant constituées de demi-cercles (10) fendus ou de paraboles (11), et la rainure en forme de demi-cercle ou de parabole entourant une zone de surface non rainurée de la couche de coeur coeur (2), qui est délimitée par une ordonnée (x) ou une abscisse (y) d'un système de coordonnées fictif, déposé de manière fictive sur la couche de coeur (2), parallèlement à la surface de base ou la surface de couverture, et qu'en outre les extrémités de deux structures de rainure (8, 9), disposées l'une à la suite de l'autre et s'étendant dans le sens de l'ordonnée ou de l'abscisse, débouchent dans une zone de rainure (12) ponctuelle située sur l'ordonnée (x) ou l'abscisse (y).

6. Panneau stratifié selon la revendication 5, **caractérisé par le fait qu**'une première structure de rainure (8) se situe au-dessus de l'ordonnée (x) et/ou de l'abscisse (y) et une deuxième structure de rainure (9) se situe au-dessous, leur sommet d'onde et leur creux d'onde étant espacés perpendiculairement par rapport à l'axe concerné, et leur distance par rapport à l'ordonnée ou l'abscisse étant déterminée par la hauteur (h) de la parabole (11) ou par le rayon (r) du demi-cercle (19).

7. Panneau stratifié selon la revendication 6, **caractérisé par le fait que** le rayon de courbure (r) des demi-cercles (10) et la hauteur (h) de la parabole sont constants.

8. Panneau stratifié selon la revendication 1, **caractérisé par le fait que** les rainures (5, 6) forment un motif de courbes qui s'étend sur la surface de base ou la surface de couverture de la couche de coeur (2) et, en vue de dessus de la surface de base ou de la surface de couverture de la couche de coeur (2), est constitué d'une famille de rainures (5, 6) réalisées en grand nombre.

9. Panneau stratifié selon la revendication 2, **caractérisé par le fait que** la distance de courbe (k) entre deux rainures (5, 6) horizontales ou verticales est constante.

10. Panneau stratifié selon les revendications 4 à 9, **caractérisé par le fait qu'**une zone partielle ou la majeure partie ou la totalité de la surface de base ou de la surface de couverture de la couche de coeur (2) est pourvue d'une famille de rainures (5, 6) en forme de courbes qui ne sont pas évidées sur toute la profondeur de courbe (t) de la couche de coeur (2).

11. Panneau stratifié selon la revendication 2, **caractérisé par le fait que** les rainures (5, 6) sont réalisées avec une largeur de courbe (z) constante qui est comprise entre 40 mm et 60 mm.
